# EUROPEAN PATENT APPLICATION

(11) **EP 1 835 402 A2**
(43) Date of publication of application: **19.09.2007**
(21) Application number: 06255138.7
(22) Date of filing: 05.10.2006
(51) Int. Cl.: G06F 11/07

(54) **Virtualization system and failure correction method**

(30) Priority: 15.03.2006 JP 2006070163
(71) Applicant: HITACHI, LTD., Chiyoda-ku Tokyo 100-8280 (JP)
(72) Inventor: Furukawa, Masayuki, Hitachi, Ltd., Tokyo 100-8220 (JP)
(74) Representative: Hodsdon, Stephen James

(57) **Abstract**

Proposed is a virtualization system and failure correction method capable of improving the operating efficiency of maintenance work. This virtualization system has one or more storage apparatuses (6), and a virtualization apparatus (4) for virtualizing a storage extent provided respectively by each of the storage apparatuses and providing the storage extent to a host system (2), wherein each of the storage apparatuses sends failure information containing detailed information of the failure to the virtualization apparatus when a failure occurs in an own storage apparatus; and wherein the virtualization apparatus stores the failure information sent from the storage apparatus.

## Description

This application relates to and claims priority from Japanese Patent Application No.2006-70163, filed on March 15, 2006, the entire disclosure of which is incorporated herein by reference.

The present invention relates to a virtualization system and failure correction method and, for instance, is suitably applied to a storage system having a plurality of storage apparatuses.

In recent years, virtualization technology for making a host system view a plurality of storage apparatuses as a single storage apparatus is being proposed.

With a storage system adopting this virtualization technology, a storage apparatus (this is hereinafter referred to as an "upper storage apparatus") that virtualizes another storage apparatus performs communication with the host system. The upper storage apparatus forwards to a virtualized storage apparatus (hereinafter referred to as a "lower storage apparatus") a data I/O request from the host system to the lower storage apparatus. Further, the lower storage apparatus that receives this data I/O request executes data I/O processing according to the data I/O request.

According to this kind of virtualization technology, it is possible to link different types of plurality of storage apparatuses and effectively use the storage resource provided by these storage apparatuses, and the addition of a new storage apparatus can be conducted without influencing the overall system (refer to Japanese Patent Laid-Open Publication No. 2005-107645).

Meanwhile, in a storage system created based on this virtualization technology, when a failure occurs during data I/O processing according to the data I/O request from the host system and it is not possible to perform the reading and writing of the requested data, the lower storage apparatus sends a notice (this is hereinafter referred to as "failure occurrence notice") to the host system via the upper storage apparatus indicating the occurrence of such failure. Therefore, when a failure occurs in any one of the lower storage apparatuses, the upper storage apparatus is able to recognize such fact based on the failure occurrence notice sent from the lower storage apparatus.

Nevertheless, with this conventional storage system, the specific contents of the failure that occurred in the lower storage apparatus are not reported from the lower storage apparatus to the host system. Thus, with this conventional storage system, upon dealing with the failure in the lower storage apparatus, it is necessary for a maintenance worker to collect the specific failure description of the lower storage apparatus directly from the lower storage apparatus.

In the foregoing case, pursuant to the development of information society in recent years, it is anticipated that a storage system based on virtualization technology using even more storage apparatus will be created in the future. Thus, with this kind of storage system, since it is possible that a failure will occur in a plurality of lower storage apparatuses at the same timing, it is desirable to create a scheme where the failure description of a plurality of lower storage apparatuses subject to failure can be collectively recognized by the maintenance worker from the perspective of improving the operating efficiency of maintenance work.

The present invention was devised in light of the foregoing points, and proposes a virtualization system and failure correction method which preferably improve the operating efficiency of maintenance work.

An aspect of the present invention, preferably capable of overcoming the foregoing problems provides a virtualization system having one or more storage apparatuses, and a virtualization apparatus for virtualizing a storage extent provided respectively by each of the storage apparatuses and providing the storage extent to a host system, wherein each of the storage apparatuses sends failure information containing detailed information of the failure to the virtualization apparatus when a failure occurs in an own storage apparatus; and wherein the virtualization apparatus stores the failure information sent from the storage apparatus.

As a result, with this storage system, even if a failure occurs in a plurality of storage apparatuses, it is possible to collectively acquire the failure description of these storage apparatuses from the virtualization apparatus, and, as a result, the operation of collecting failure information during maintenance work can be simplified.

An aspect of the present invention provides a failure correction method in a virtualization system having one or more storage apparatuses, and a virtualization apparatus for virtualizing a storage extent provided respectively by each of the storage apparatuses and providing the storage extent to a host system, including: a first step of each of the storage apparatuses sending failure information containing detailed information of the failure to the virtualization apparatus when a failure occurs in an own storage apparatus; and a second step of the virtualization apparatus storing the failure information sent from the storage apparatus.

As a result, with this storage system, even if a failure occurs in a plurality of storage apparatuses, it is possible to collectively acquire the failure description of these storage apparatuses from the virtualization apparatus, and, as a result, the operation of collecting failure information during maintenance work can be simplified.

According to aspects of the present invention, it is possible to realize a virtualization system and failure correction method capable of improving the operating efficiency of maintenance work.

### DESCRIPTION OF DRAWINGS

FIG. 1 is a block diagram showing the configuration of a storage system according to the present embodiment;
FIG**.** 2 is a block diagram showing the configuration of an upper storage apparatus and a lower storage apparatus;
FIG. 3 is a conceptual diagram for explaining control information of the upper storage apparatus;
FIG. 4 is a conceptual diagram showing a vendor information management table of the upper storage apparatus;
FIG. 5 is a conceptual diagram showing an unused volume management table of an own storage;
FIG. 6 is a conceptual diagram of an unused volume management table of a system;
FIG. 7 is a conceptual diagram for explaining control information of the lower storage apparatus;
FIG. 8 is a conceptual diagram showing a vendor information management table of the lower storage apparatus;
FIG. 9 is a conceptual diagram for explaining failure information of the upper storage apparatus;
FIG. 10 is a conceptual diagram for explaining failure information of the lower storage apparatus;
FIG. 11 is a time chart for explaining failure information consolidation processing;
FIG. 12 is a time chart for explaining failure information consolidation processing;
FIG. 13 is a flowchart for explaining risk ranking processing; and
FIG. 14 is a flowchart for explaining substitute volume selection processing.

An embodiment of the present invention is now explained with reference to the drawings.

### (1) Configuration of Storage System in Present Embodiment

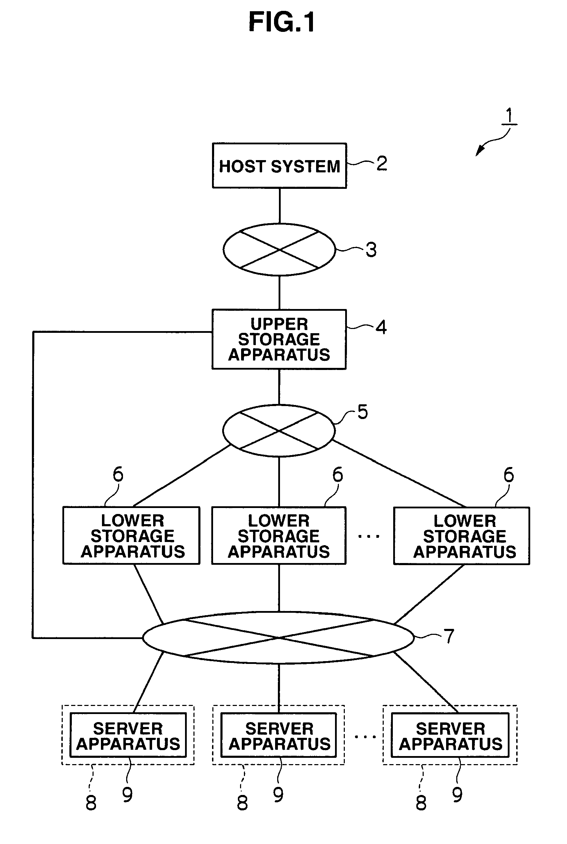

FIG. 1 shows a storage system 1 according to the present embodiment. In this storage system 1, a host system 2 as an upper-level system is connected to an upper storage apparatus 4 via a first network 3, and a plurality of lower storage apparatuses 6 are connected to the upper storage apparatus 4 via a second network 5. The upper storage apparatus 4 and each of the lower storage apparatuses 6 are respectively connected to a server device 9 installed in a service base 8 of a vendor of one's own storage apparatus via a third network 7.

The host system 2 is configured from a mainframe computer device having an information processing resource such as a CPU (Central Processing Unit) and memory. As a result of the CPU executing the various control programs stored in the memory, the overall host system 2 executes various control processing. Further, the host system 2 has a an information input device (not shown) such as a keyboard, switch, pointing device or microphone, and an information output device (not shown) such as a monitor display or speaker.

The first and second networks 3, 5, for instance, are configured from a SAN (Storage Area Network), LAN (Local Area Network), Internet, public line or dedicated line. Communication between the host system 2 and upper storage apparatus 4 and communication and communication between the upper storage apparatus 4 and lower storage apparatus 6 via these first or second networks 3, 5, for instance, is conducted according to a fibre channel protocol when the first or second networks 3, 5 are a SAN, and conducted according to a TCP/IP (Transmission Control Protocol/Internet Protocol) when the first or second networks 3, 5 are a LAN.

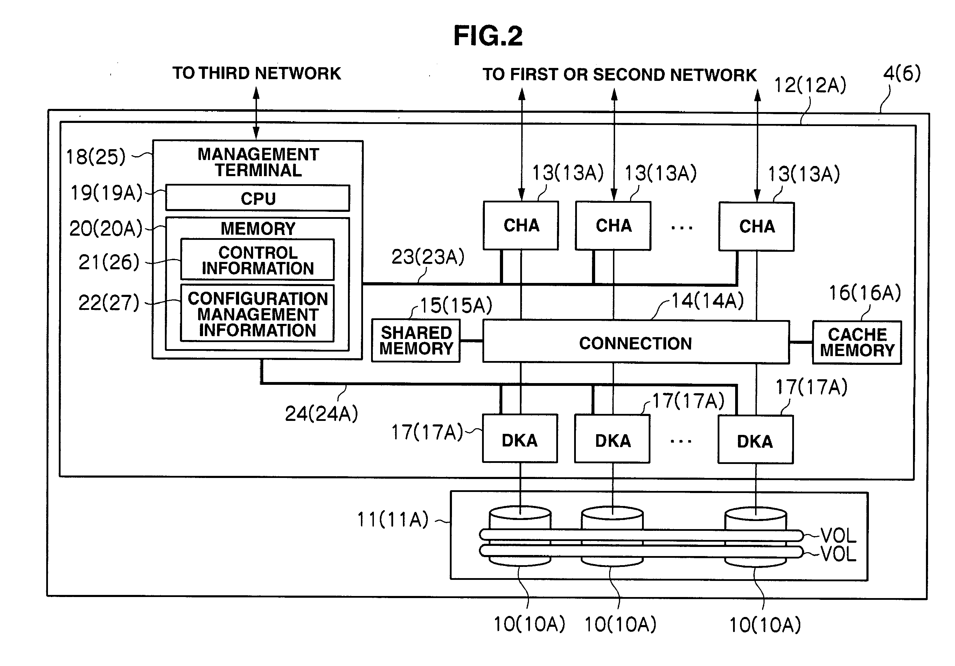

The upper storage apparatus 4 has a function of virtualizing a storage extent provided by the lower storage apparatus 6 to the host system 2, and, as shown in FIG. 2, is configured by including a disk device group 11 formed from a plurality of disk devices 10 storing data, and a controller 12 for controlling the input and output of data to and from the disk device group 11.

Among the above, as the disk device 10, for example, an expensive disk such as a SCSI (Small Computer System Interface) disk or an inexpensive disk such as a SATA (Serial AT Attachment) disk is used.

Each disk device 10 is operated by the control unit 12 according to the RAID system. One or more logical volumes (this is hereinafter referred to as "logical volume") VOL are respectively configured on a physical storage extent provided by one or more disk devices 10. And data is stored in block (this is hereinafter referred to as a "logical block") units of a prescribed size in this logical volume VOL.

A unique identifier (this is hereinafter referred to as a "LUN (Logical Unit Number)) is given to each logical volume VOL. In the case of this embodiment, the input and output of data is conducted upon designating an address, which is a combination of this LUN and a number unique to a logical block (LBA: Logical Block Address) given to each logical block.

Meanwhile, the controller 12 is configured by including a plurality of channel adapters 13, a connection 14, a shared memory 15, a cache memory 16, a plurality of disk adapters 17 and a management terminal 18.

Each channel adapter 13 is configured as a microcomputer system having a microprocessor, memory and network interface, and has a port for connecting to the first or second networks 3, 5. The channel adapter 13 interprets the various command sent from the host system 2 via the first network 3 and executes the corresponding processing. A network address (for instance, an IP address or WWN) is allocated to each channel adapter 13 for identifying the channel adapters 13, and each channel adapter 13 is thereby able to independently behave as a NAS (Network Attached Storage).

The connection 14 is connected to the channel adapters 13, a shared memory 15, a cache memory 16 and disk adapters 17. The sending and receiving of data and command between the channel adapters 13, shared memory 15, cache memory 16 and disk adapters 17 are conducted via this connection 14. The connection 14 is configured, for examples, from a switch or buss such as an ultra fast crossbar switch for performing data transmission by way of high-speed switching.

The shared memory 15 is a storage memory to be shared by the channel adapters 13 and disk adapters 10. The shared memory 15, for instance, is used for storing system configuration information relating to the configuration of the overall upper storage apparatus 4 such as the capacity of each logical volume VOL configured in the upper storage apparatus 4, and performance of each disk device 10 input by the system administrator (for example, average seek time, average rotation waiting time, disk rotating speed, access speed and data buffer capacity). Further, the shared memory 15 also stores information relating to the operating status of one's own storage apparatus continuously collected by the CPU 19; for instance, on/off count of the own storage apparatus, total operating time and continuous operating time of each disk device 10, total number of accesses and access interval from the host system 2 to each logical volume VOL.

The cache memory 16 is also a storage memory to be shared by the channel adapter 13 and disk adapter 10. This cache memory 16 is primarily used for temporarily storing data to be input and output to and from the upper storage apparatus 4.

Each disk adapter 17 is configured as a microcomputer system having a microprocessor and memory, and functions as an interface for controlling the protocol during communication with each disk device 10. These disk adapters 17, for instance, are connected to the corresponding disk device 10 via the fibre channel cable, and the sending and receiving of data to and from the disk device 100 is conducted according to the fibre channel protocol.

The management terminal 18 is a computer device having a CPU 19 and memory 20, and, for instance, is configured from a laptop personal configuration. The control information 21 and failure information 22 described later are retained in the memory 20 of this management terminal 18. The management terminal 18 is connected to each channel adapter via the LAN 23, and connected to each disk adapter 24 via the LAN 24. The management terminal 18 monitors the status of a failure in the upper storage apparatus 4 via the channel adapters 13 and disk adapters 14. Further, the management terminal 18 accesses the shared memory 15 via the channel adapters 13 or disk adapters 14, and acquires or updates necessary information of the system configuration information.

The lower storage apparatus 6, as shown by "A" being affixed to the same reference numeral of the corresponding components with the upper storage apparatus 4 illustrated in FIG. 2, is configured the same as the upper storage apparatus 4 excluding the configuration of the control information 26 and failure information 27 retained in a memory 20A of the management terminal 25. With the lower storage apparatus 6, a single channel adapter 13A is connected to one of the channel adapters 13 via the second network 5, and the [lower storage apparatus 6] is able to send and receive necessary commands and data to and from the upper storage apparatus 4 through the second network 5.

Further, the management terminal 25 of the lower storage apparatus 6 is connected to the management terminal 18 of the upper storage apparatus 4 via the third network 7 configured from the Internet, for instance, and is capable of sending and receiving commands and necessary information to and from the management terminal 18 of the upper storage apparatus 4 through this third network 7.

The server device 9, as with the host system 2, is a mainframe computer device having an information processing resource such as a CPU or memory, an information input device (not shown) such as a keyboard, switch, pointing device or microphone, and an information output device (not shown) such as a monitor display or speaker. As a result of the CPU executing the various control programs stored in the memory, it is possible to execute the analysis processing of the failure information 22, 27 to be sent from the upper storage apparatus 4 as described later.

### (2) Failure Information Consolidating Function

### (2-1) Failure Information Consolidating Function in Storage System

Next, the failure information consolidating function of the storage system 1 according to the present embodiment is explained.

The storage system 1 according to the present embodiment is characterized in that, when the foregoing failure occurrence notice is sent from any one of the lower storage apparatuses 6 to the host system, the upper storage apparatus 4 performing the relay thereof detects the occurrence of a failure in the lower storage apparatus 6 based on such failure occurrence notice, and then collects failure information 27 containing the detailed information of failure from the each lower storage apparatus 6. Thereby, with this storage system 1, as a result of the system administrator reading from the upper storage apparatus 4 the failure information 27 collected by such upper storage apparatus 4 during maintenance work, he/she will be able to immediately recognize in which region of which lower storage apparatus 6 the failure has occurred.

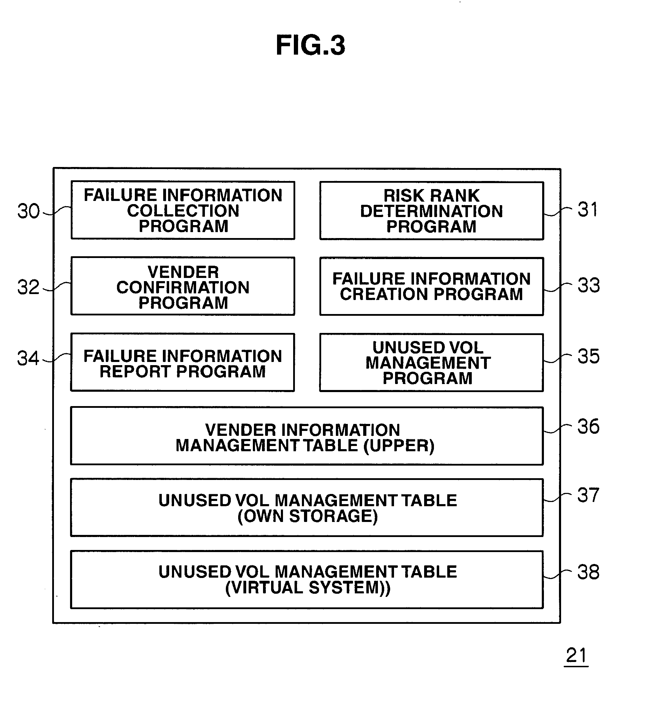

In order to realize this kind of failure information consolidating function, as shown in FIG. 3, the memory 20 of the management terminal of the upper storage apparatus 4 stores, as the foregoing control information 21, a failure information collection program 30, a risk rank determination program 31, a vendor confirmation program 32, a failure information creation program 33, a failure information reporting program 34 and an unused volume management program 35, as well as a vendor information management table 36, an own storage unused volume management table 37 and a system unused volume management table 38.

Among the above, the failure information collection program 30 is a program for collecting the failure information 27 (FIG. 2) from the lower storage apparatus 6. The upper storage apparatus 4 as necessary requests, based on this failure information collection program 30, the lower storage apparatus 6 to create the failure information 27 (FIG. 2) and send the created failure information 27 to the own storage apparatus.

The risk rank determination program 31 is a program for determining the probability of a failure occurring in the respective regions that are exchangeable in the own storage apparatus. When the same region as the failure occurrence region of the failed lower storage apparatus 5 exists in the own storage apparatus 4 or storage system 1, the upper storage apparatus 4, according to this risk rank determination program [31], determines the probability of a failure occurring in the same region based on the operation status and the like of the same region (this is hereinafter referred to as a "risk rank").

The vendor confirmation program 32 is a program for managing the collectible information among the failure information 27 (FIG. 2) created by each lower storage apparatus 6. As described later, with this storage system 1, it is possible to refrain from notifying the upper storage apparatus 4 on the whole or a part of the failure information 27 (FIG. 27) created by the lower storage apparatus 6 for the lower storage apparatus 6. Thus, with this upper storage apparatus 4, which detailed information among the failure information 27 has been permitted to be disclosed based on the vendor confirmation program 32 is managed with the vendor information management table 36.

The failure information creation program 33 is a program for creating the failure information 22. The upper storage apparatus 4 creates the failure information 22 (FIG. 2) of the upper storage apparatus 4 and overall storage system 1 based on this failure information creation program 34.

The failure information reporting program 34 is a program for presenting the created failure information 22 to the system administrator. The upper storage apparatus 4 displays the created failure information 22 on a display (not shown) of the management terminal 18 based on this failure information reporting program 34 and according to a request from the system administrator.

Further, the unused volume management program 35 is a program from managing the unused logical volume (this is hereinafter referred to as simply as an "unused volume") VOL. The upper storage apparatus 4 creates the own storage unused volume management table 37 and system unused volume management table 38 described later based on this unused volume management program 35, and manages the unused volume in the own storage apparatus and storage system 1 with the own storage unused volume management table 37 and system unused volume management table 38.

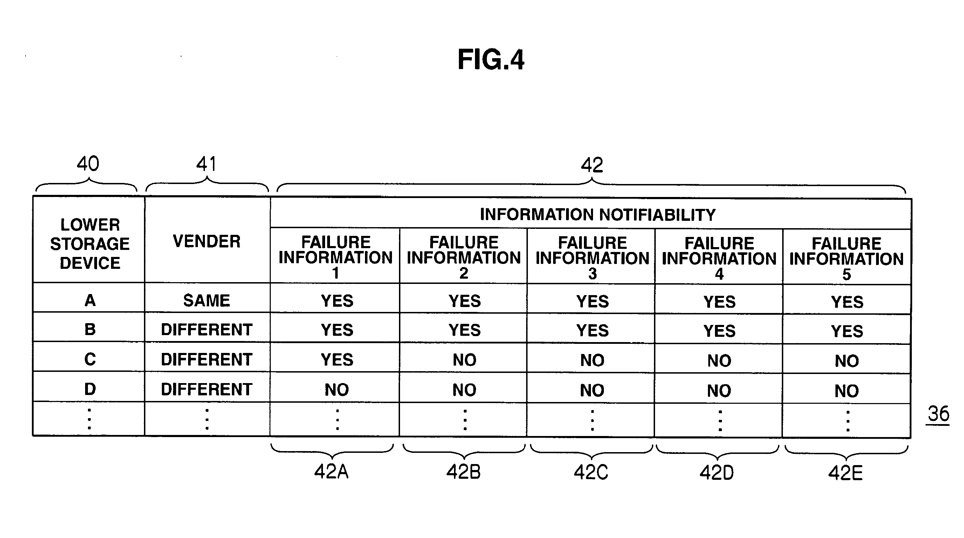

The vendor information management table 36 is a table for managing which detailed information among the failure information 27 (FIG. 1) created by the lower storage apparatus 6 is configured to be notifiable to the upper storage apparatus 4 and which detailed information is configured to be non-notifiable in each lower storage apparatus 6, and, as shown in FIG. 4, is configured from a "lower storage apparatus" field 40, a "vendor" field 41 and an "information notifiability" field 42.

Among the above, the "lower storage apparatus" field 40 stores an ID (identifier) of each lower storage apparatus 6 connected to the upper storage apparatus 4. Further, the "vendor" field 41 stores information ("Same" or "Different") regarding whether the vendor of such lower storage apparatus 6 is the same as the vendor of the upper storage apparatus 4.

Further, the "information notifiability" field 42 is provided with a plurality of "failure information" fields 42A to 42E respectively corresponding to each piece of detailed information configuring the failure information 27, and information ("Yes" or "No") representing whether the corresponding detailed information can or cannot be notified is stored in the "failure information" fields 42A to 42E.

Here, as the detailed information of the failure information 27, there is exchange region information (failure information 1) representing the exchangeable region to be exchanged for recovering the failure, failure occurrence system internal status information (failure information 2) representing the system internal status at the time of failure during data writing or data reading, system operation information (failure information 3) including the operating time of the overall lower storage apparatus or each device, on/off count of the power source, continuous operating time, access interval and access frequency, other information (failure information 4) such as the serial number of the lower storage apparatus, and risk rank information (failure information 5) which is the risk rank of each exchangeable region.

Accordingly, in the example shown in FIG. 4, for example, in the lower storage apparatus 6 having an ID of "A", the vendor is the same as the upper storage apparatus 4, and failure information 1 to failure information 5 among the failure information 27 (FIG. 2) are all set to be notifiable to the upper storage apparatus 4. Meanwhile, with the lower storage apparatus 6 having an ID of "C", the vendor is different from the upper storage apparatus 4, and only failure information 1 among the failure information 27 is set to be notifiable to the upper storage apparatus 4.

Incidentally, each piece of information in the "lower storage apparatus" field 40, "vendor" field 41 and "information notifiability" field 42 in this vendor information management table 36 is manually set by the system administrator. Nevertheless, the vendor may also set this kind of information in the lower storage apparatus 6 in advance, and the upper storage apparatus 4 may collect this information in a predetermined timing and create the vendor information management table 36.

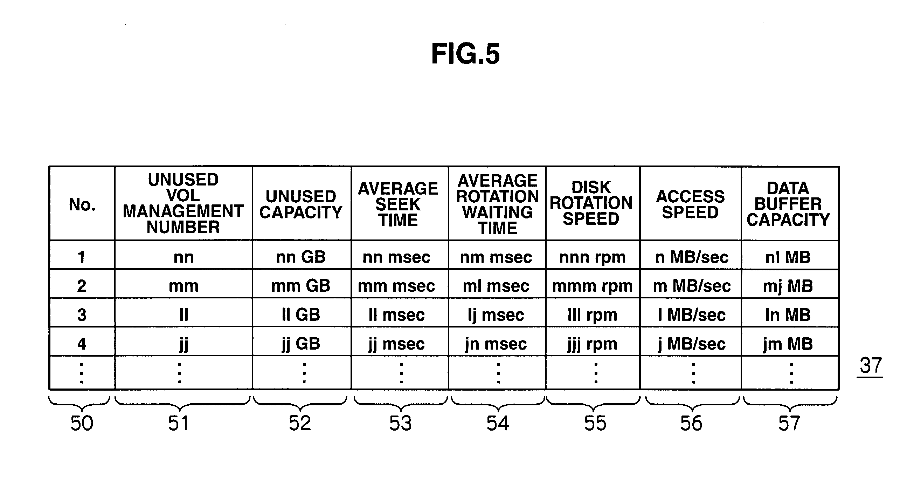

The own storage unused volume management table 37 is a table for managing the unused volume VOL in the own storage apparatus, and, as shown in FIG. 5, is configured from an "entry number" field 50, an "unused volume management number" field 51, an "unused capacity" field 52, an "average seek time" field 53, an "average rotation waiting time" field 54, a "disk rotating speed" field 55, an "access speed" field 56 and a "data buffer capacity" field 57.

Among the above, the "entry number" field 50 stores the entry number to the own storage unused volume management table 37 of the unused volume VOL. Further, the "unused volume management number" field 51 and "unused capacity" field 52 respectively store the management number (LUN) and capacity of its unused volume VOL.

Further, the "average seek time" field 53, "average rotation waiting time" field 54, "disk rotating speed" field 55, "access speed" field 56 and "data buffer capacity" field 57 respectively store the average seek time, average rotation waiting time, disk rotating speed per second, access speed and data buffer capacity of the disk device 10 (FIG. 2) providing the storage extent to which the respective unused volumes VOL are set. Incidentally, numerical values relating to the performance of these disk devices 10 are manually input in advance by the system administrator in the upper storage apparatus 4.

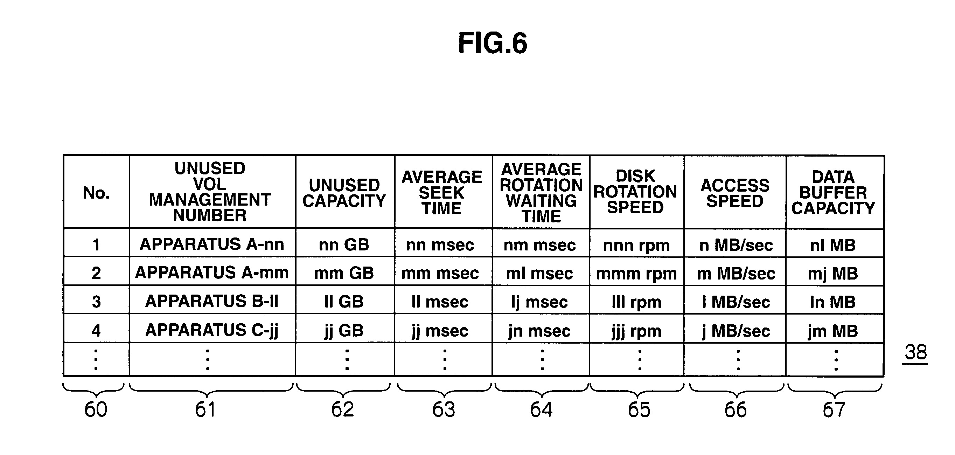

Further, the system unused volume management table 38 is a table for managing the unused volume VOL existing in the storage system 1. This system unused volume management table 38, as shown in FIG. 6, is configured from an "entry number" field 60, an "unused volume management number" field 61, an "unused capacity" field 62, an "average seek time" field 63, an "average rotation waiting time" field 64, a "disk rotating speed" field 65, an "access speed" field 66 and a "data buffer capacity" field 67.

The "unused volume management number" field 61 stores a management number combining the identification number of the storage apparatus (upper storage apparatus 4 or lower storage apparatus 6) in which such unused volume VOL, and the management number (LUN) of such unused volume VOL regarding the respective unused volumes VOL in the virtual storage system.

Further, the "entry number" field 60, "unused capacity" field 62, "average seek time" field 63, "average rotation waiting time" field 64, "disk rotating speed" field 65, "access speed" field 66 and "data buffer capacity" field 67 store the same data as the corresponding fields 50, 52 to 57 in the own storage unused volume management table 37.

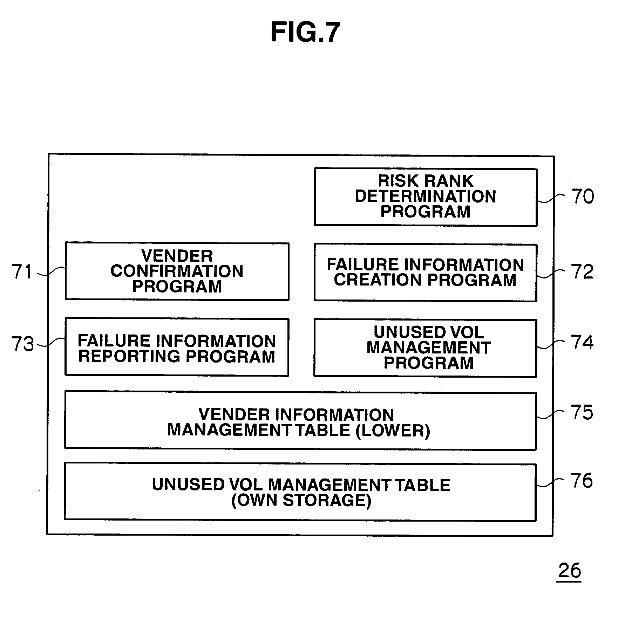

Meanwhile, in relation to the foregoing failure information consolidating function, as shown in FIG. 7, the memory 20A (FIG. 2) of the management terminal 25 (FIG. 2) of each lower storage apparatus 6 stores, as the foregoing control information 26 (FIG. 2), a risk rank determination program 70, a vendor confirmation program 71, a failure information creation program 72, a failure information creation program 73 and an unused volume management program 74, as well as a vendor information management table 75 and an own storage unused volume management table 76.

Here, since the programs 70 to 74 have the same functions as the corresponding programs 31 to 35 of the control information 21 explained with reference to FIG. 3 other than that the risk rank determination program 70 executes determination processing of the risk rank only regarding the own storage apparatus (lower storage apparatus 6), the vendor confirmation program 71 manages only the constituent elements of the failure information 27 (FIG. 27) reportable to the upper storage apparatus 4, the failure information creation program 72 creates only the failure information regarding the own storage apparatus, the failure information reporting program 73 reports the failure information of the own storage apparatus to the upper storage apparatus 4, and the unused volume management program 74 manages only the unused volume VOL in the own storage apparatus, the explanation thereof is omitted.

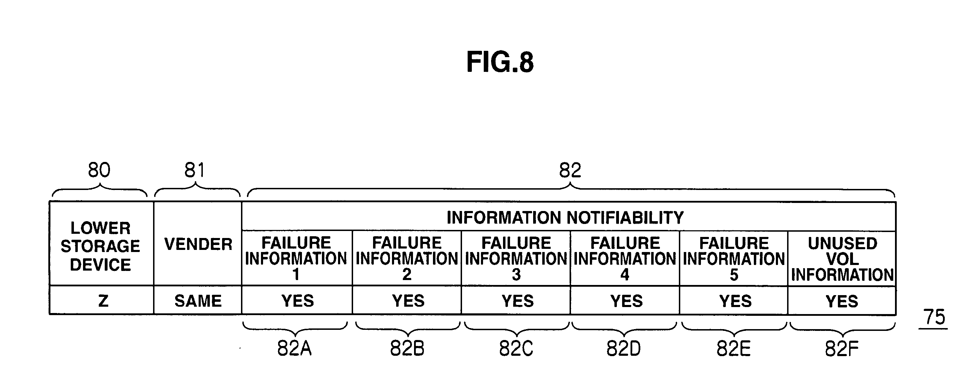

The vendor information management table 75 is a table for managing which detailed information is notifiable to the upper storage apparatus 4 and which detailed information is non-notifiable among the failure information 27 created by the lower storage apparatus 6, and, as shown in FIG. 8, is configured from an "upper storage apparatus" field 80, "vendor" field 81 and an "information notifiability" field 82.

Among the above, the "upper storage apparatus" field 80 stores the ID of the upper storage apparatus 4. Further, the "vendor" field 81 representing whether the vendor of the own storage apparatus is the same as the vendor of the upper storage apparatus 4.

Further, the "information notifiability" field 82 is provided with a plurality of "failure information" fields 82A to 82E respectively corresponding to each piece of detailed information configuring the failure information 27 as with the upper vendor information management table 36 (FIG. 4), and information ("Yes" or "No") representing whether the corresponding detailed information can or cannot be notified is stored in the "failure information" fields 82A to 82E.

Further, the "information notifiability" field 82 is also provided with an "unused volume information" field 82F, and information ("Yes" or "No") representing whether the information (c.f. FIG. 5) regarding the unused volume VOL in the own storage apparatus managed by the unused volume management program 74 can or cannot be notified to the upper storage apparatus 4 (whether or not notification to the upper storage apparatus 4 is permitted) is stored in this "unused volume information" field 82.

Accordingly, in the example shown in FIG. 8, for instance, in the lower storage apparatus 6 having an ID of "Z", the vendor is the same as the upper storage apparatus 4, and failure information 1 to failure information 5 among the failure information 27 are all set to be notifiable to the upper storage apparatus 4. Moreover, it is evident that information concerning the unused volume VOL is also set to be notifiable to the upper storage apparatus 4.

Incidentally, each piece of information in the "upper storage apparatus" field 80, "vendor" field 81 and "information notifiability" field 82 in this vendor information management table 75 is set by the vendor of the lower storage apparatus 6 upon installing the lower storage apparatus 6.

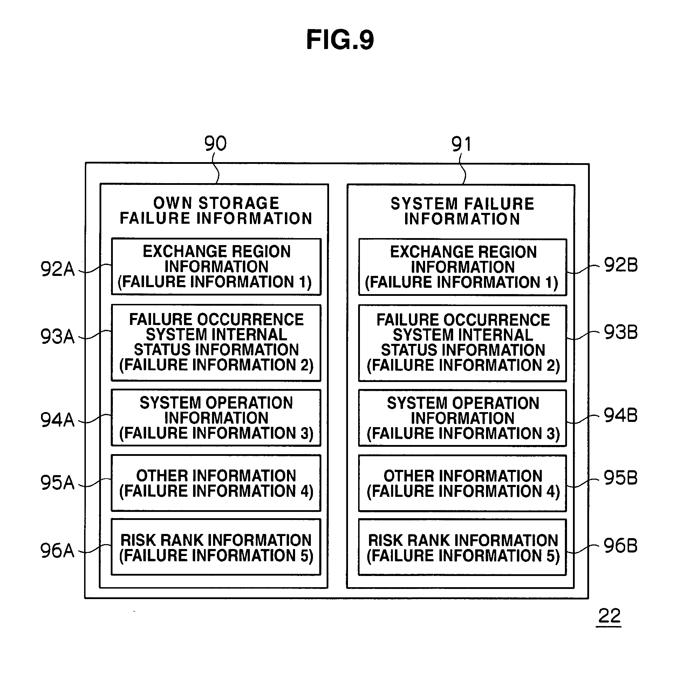

Contrarily, the memory 20 (FIG. 2) of the management terminal 18 of the upper storage apparatus 4 retains, in relation to the foregoing failure information consolidating function, as shown in FIG. 9, the failure information 22 containing the own storage failure information 90 which is failure information regarding the own storage apparatus, and the system failure information 91 which is failure information regarding the overall storage system 1.

Among the above, the own storage failure information 90 is configured from exchange region information 91A, failure occurrence system internal status information 92A, system operating status information 93A and other information 95A relating to the own storage apparatus, and risk rank information 96A for each exchangeable region in the own storage apparatus.

Further, the system failure information 91 is configured from exchange region information 92B, failure occurrence system internal status information 92B, system operating status information 93B and other information 95B relating to the overall virtual storage system, and from risk rank information 96A for each exchangeable region in the storage system 1.

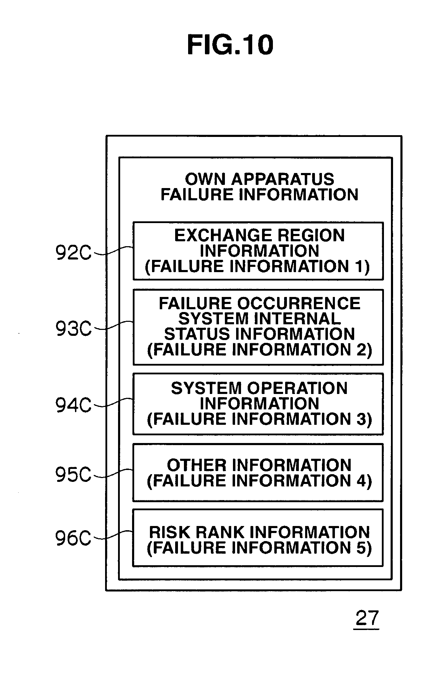

Contrarily, as shown in FIG. 10, the memory 20A (FIG. 2) of the management terminal 25 (FIG. 2) of the lower storage apparatus 6 retains, in relation to the failure information consolidating function, the failure information 27 only containing failure information relating to the own storage apparatus. Since this failure information 27 is the same as the own storage failure information 90 explained with reference to FIG. 9, the explanation thereof is omitted.

### (2-2) Failure Information Consolidation Processing

Next, the specific processing content of the upper storage apparatus 4 and each lower storage apparatus 6 relating to the foregoing failure information consolidating function is explained taking an example where a failure occurred in a logical volume VOL used by a user.

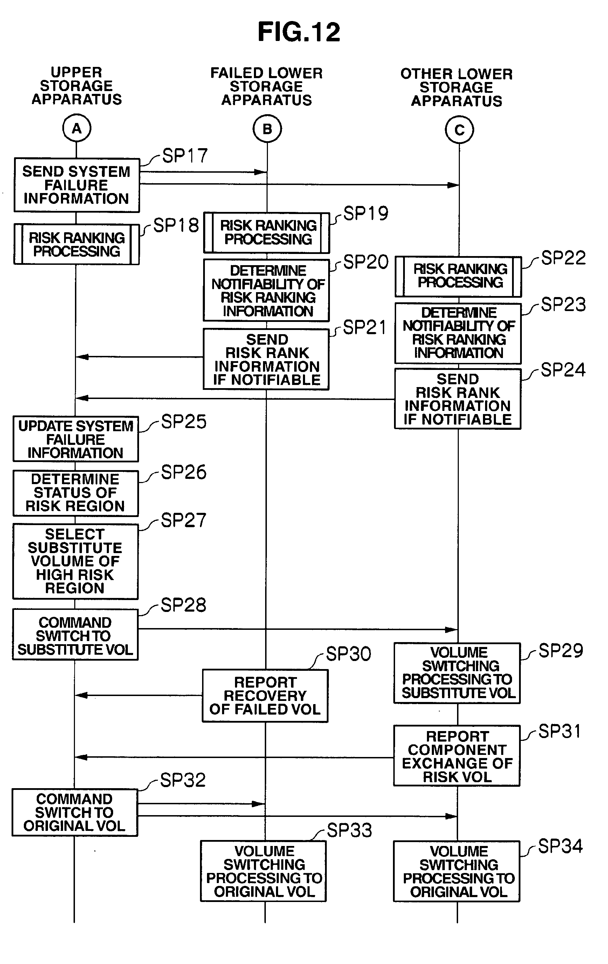

FIG**.** 11 and FIG. 12 show the processing flow of the upper storage apparatus 4 and lower storage apparatus 6 regarding the failure information consolidating function.

When the upper storage apparatus 4 receives a data I/O request from the host system 2, it forwards this to the corresponding lower storage apparatus 6 (SP1). And, when the lower storage apparatus 6 receives this data I/O request, it executes the corresponding data I/O processing (SP2).

Here, when a failure occurs in the logical volume VOL performing the data I/O processing(SP3), the lower storage apparatus 2 sends the foregoing failure occurrence notice to the host system 2 via the upper storage apparatus 4 through a standard data transmission path (SP4). Moreover, the CPU (this is hereinafter referred to as a "lower CPU") 19A of the management terminal 25 of the lower storage apparatus 4, separate from the report to the host system 2, reports the occurrence of a failure to the management terminal 18 of the upper storage apparatus 4 (SP4).

Then, the lower CPU 19A of the lower storage apparatus (this is hereinafter referred to as a "failed lower storage apparatus") 6 subject to a failure thereafter creates the failure information 27 explained with reference to FIG. 10 based on the system configuration information of the own storage apparatus (failed lower storage apparatus 6) stored in the shared memory 15A (FIG. 2) (SP6).

Next, the lower CPU 19A of the failed lower storage apparatus 6 determines, based on the vendor information management table 75 (FIG. 7), which detailed information (exchange region information 92C, failure occurrence system internal status information 93C, system operation information 94C or other information 95C) among the failure information 27 is set to be notifiable to the upper storage apparatus 4 (SP7). Then, the lower CPU 19A sends to the upper storage apparatus 4 the detailed information set to be notifiable among the failure information 27 created at step SP7 based on this determination (SP8).

Incidentally, the CPU (this is hereinafter referred to as "upper CPU") 19 of the management terminal 18 of the upper storage apparatus 4 foremost confirms the type of detailed information of the failure information 27 set to be notifiable regarding the failed lower storage apparatus 6 based on the vendor information management table 36 (FIG. 4) upon receiving a failure occurrence notice from the lower storage apparatus 6 and when the failure information 27 is not sent from the failed lower storage apparatus 6 for a predetermined period of time thereafter. Then, the upper CPU 19, based on the failure information collection program 30, thereafter sends a command (this is hereinafter referred to as a "failure information send request command") for forwarding the detailed information of the failure information 27 set to be notifiable regarding the failed lower storage apparatus 6 to the failed lower storage apparatus 6. Like this, the upper CPU 19 collects the failure information 27 of the failed lower storage apparatuses (SP5).

Meanwhile, when the upper CPU 19 receives the failure information 27 sent from the failed lower storage apparatus 6, it sends this failure information to the server device 9 installed in the service base 8 of the vendor of the own storage apparatus according to the failure information reporting program 34 (FIG. 3) (SP9). Further, when the server device 9 receives the failure information 27, it forwards this to the service device 9 installed in the service base 8 of the vendor of the failed lower storage apparatus 6. As a result, with the storage system 1, the vendor of the failed lower storage apparatus 6 is able to analyze, based on this failure information 27, the failure description of the failed lower storage apparatus 6 that it personally manufactured and sold.

Next, the upper CPU 19 creates the system failure information 91 among the failure information 22 explained with reference to FIG. 9 according to the failure information creation program 33 (FIG. 3) and based on the failure information 27 provided from the failed lower storage apparatus 6 (SP10). Thereupon, with respect to the detailed information of the failure information 27 set to be notifiable which could not be collected from the failed lower storage apparatus 6, the upper CPU 19 adds information to the system failure information 91 indicating that such uncollected information should be directly acquired from the failed lower storage apparatus 6 upon the maintenance work to be performed by the system administrator (SP10).

Further, in order to collect the failure information 27 from the other lower storage apparatus (this is hereinafter referred to as an "unfilled lower storage apparatus") 6 which is not subject to a failure, the upper CPU 19 thereafter foremost refers to the vendor information management table 36 (FIG. 3) regarding the each unfilled lower storage apparatus 6 and confirms the type of detailed information of the failure information 27 (FIG. 10) set to be notifiable regarding such unfilled lower storage apparatus 6 according to the failure information collection program 30. Then, the upper CPU 19 sends a failure information send request command for sending the detailed information of the failure information 27 set to be notifiable for each unfilled lower storage apparatus 6 (SP11).

Further, the upper CPU 19 thereafter creates the own storage failure information 90 among the failure information 22 explained with reference to FIG. 9 according to the failure information creation program 33 (FIG. 3) and based on the system configuration information of the lower storage apparatus 6 stored in the shared memory 15 (SP12).

Meanwhile, the lower CPU 19A of each unfilled lower storage apparatus 6 that received the failure information send request command creates the failure information 27 regarding the own storage apparatus according the failure information creation program 72 (FIG. 7) and based on the system configuration information of the own storage apparatus 6 stored in the shared memory 15A(FIG. 2) (SP13).

Then, the lower CPU 19A of each unfilled lower storage apparatus 6 thereafter confirms the type of detailed information set to be notifiable to the upper storage apparatus 4 among the failure information 7 created at step S13 and sends only the detailed information set to be notifiable to the upper storage apparatus 6 according to the failure information reporting program 73 (FIG. 7) and based on the vendor information management table 75 (FIG. 8) of the own storage apparatus (SP15).

Then, the upper CPU 19 that received the failure information 27 sent from the unfilled lower storage apparatus 6 updates the system failure information 91 (FIG. 9) among the failure information 22 (FIG. 9) retained in the memory 20 (FIG. 2) based on the failure information 27 (SP16). As a result, the failure information of the overall storage system 1 will be consolidated in the system failure information 91 stored in the upper storage apparatus 4.

Further, the upper CPU 19 thereafter sends this updated system failure information 91 to each lower storage apparatus 6 (failed lower storage apparatus 6 and each unfilled lower storage apparatus 6) (SP17). Thereupon, the upper CPU 19 refers to the vendor information management table 36 (FIG. 4), and transmits to the lower storage apparatus 6 only the detailed information of the failure information set to be notifiable to the upper storage apparatus 4 regarding such lower storage apparatus among the system failure information 91 for each lower storage apparatus 6.

Further, the upper CPU 19 thereafter determines the risk rank of the region that is an exchangeable region in the own storage apparatus (upper storage apparatus 4) and which is the same as the failure occurrence region (logical volume VOL) in the failed lower storage apparatus 6 according to the risk rank determination program 31 (FIG. 3) and based on the system failure information 91 (SP18).

Similarly, the lower CPU 19A of each lower storage apparatus 6 (failed lower storage apparatus 6 or unfilled lower storage apparatus 6) that received the system failure information 91 from the upper storage apparatus 4 also determines the risk rank of the region that is an exchangeable region in the own storage apparatus and which is the same as the failure occurrence region in the failed lower storage apparatus 6 according to the risk rank determination program 70 (FIG. 7) and based on the system failure information 91 (SP19, SP22).

Next, the lower CPU 19A of these lower storage apparatuses 6 determines whether the information (this is hereinafter referred to simply as "risk rank information") of the risk rank of the own storage apparatus obtained based on the risk ranking processing is set to be notifiable to the upper storage apparatus according to the failure information reporting program 73 (FIG. 7) and based on the vendor information management table 75 (FIG. 8) retained in the memory 20A (FIG. 2) (SP20, SP23). Then, the lower CPU 19A sends this risk rank information to the upper storage apparatus 4 only when a positive result is obtained in the foregoing determination (SP21, SP24).

Contrarily, when the upper CPU 19 receives the risk rank information sent from each lower storage apparatus 6, it sequentially updates the system failure information 91 among the failure information 22 (FIG. 9) (SP25). Thereby, the risk rank information of the upper storage apparatus 4 and each lower storage apparatus 6 in the storage system 1 will be consolidated in the system information 91 of the upper storage apparatus 4.

Then, the upper CPU 19 thereafter predicts the occurrence of a failure according to the risk rank determination program 31 (FIG. 3) and based on the latest system failure information 91 (SP26). Specifically, the upper CPU 19 determines whether there is a logical volume (this is hereinafter referred to as a "dangerous volume") VOL in which a failure may occur in any one of the lower storage apparatuses 6 in the new future based on the latest system failure information 91 (SP26).

When the upper CPU 19 obtains a positive result in this determination, it selects a logical volume (this is hereinafter referred to as a "substitute volume") VOL as a substitute of the dangerous volume VOL from the unused volume VOL registered in the system unused volume management table 38 (FIG. 6) according to the unused volume management program 35 (FIG. 3) (SP27). Thereupon, the upper CPU 19 selects an unused volume VOL having a performance that is equal to the dangerous volume VOL as the substitute volume VOL. Further, the upper CPU 19 simultaneously adds information in the risk rank information 96B (FIG. 9) of the system failure information 91 indicating that it is necessary to exchange the disk device 10 providing the foregoing dangerous volume VOL in the storage system 1 (SP27).

When the upper CPU 19 selects the substitute volume VOL, it gives a command (this is hereinafter referred to as a "data migration command") to the lower storage apparatus 29 provided with the dangerous volume VOL indicating the migration of data stored in the dangerous volume VOL to the substitute volume VOL (SP28).

As a result, the lower CPU 19A of the lower storage apparatus 6 that received the data migration command thereafter migrates the data stored in the dangerous volume VOL to the substitute volume VOL, and executes volume switching processing for switching the path from the host system 2 to the dangerous volume VOL to the path to the substitute volume VOL (SP29).

Meanwhile, when the recovery operation of the failed volume VOL by the maintenance worker such as the disk device 10 providing the logical volume (this is hereinafter referred to as a "failed volume") VOL subject to a failure being exchanged, the lower CPU 19A of the failed lower storage apparatus 6 reports this to the upper storage apparatus 4 (SP30).

Further, when the disk device 10 providing the dangerous volume VOL is exchanged, the lower CPU 19A of the lower storage apparatus 6 that had the dangerous volume VOL from which data was migrated to the substitute volume VOL at step SP29 reports this to the upper storage apparatus 4 (SP31).

When the upper CPU 19 of the upper storage apparatus 4 receives this report, it sends a data migration command to the lower storage apparatus 6 (original failed lower storage apparatus 6 or unfilled lower storage apparatus 6 that had the dangerous volume VOL) that made the report indicating that the data saved from the failed volume VOL or dangerous volume VOL in the substitute volume VOL should be migrated to the original failed volume VOL or dangerous volume VOL after recovery or after the exchange of components (SP32).

As a result, the lower CPU of the lower storage apparatus that received this data migration command will thereafter migrate the data stored in the substitute volume VOL to the original failed volume VOL or dangerous volume VOL after recovery or after the exchange of components, and executes volume switching processing of switching the path from the host system 2 to the substitute volume VOL to a path to the original failed volume VOL or original dangerous volume VOL (SP33, SP34).

### (2-3) Risk Ranking Processing

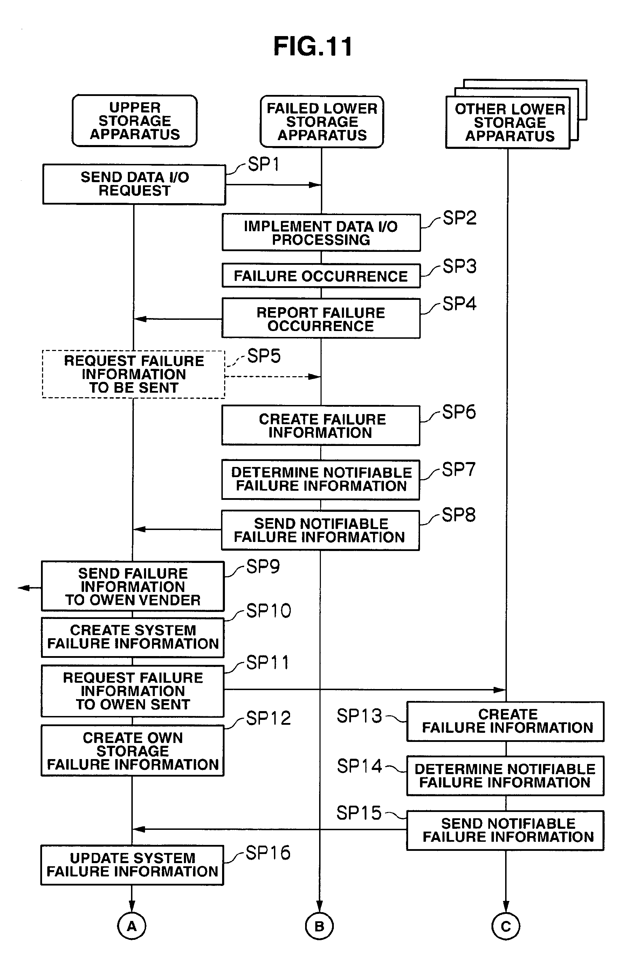

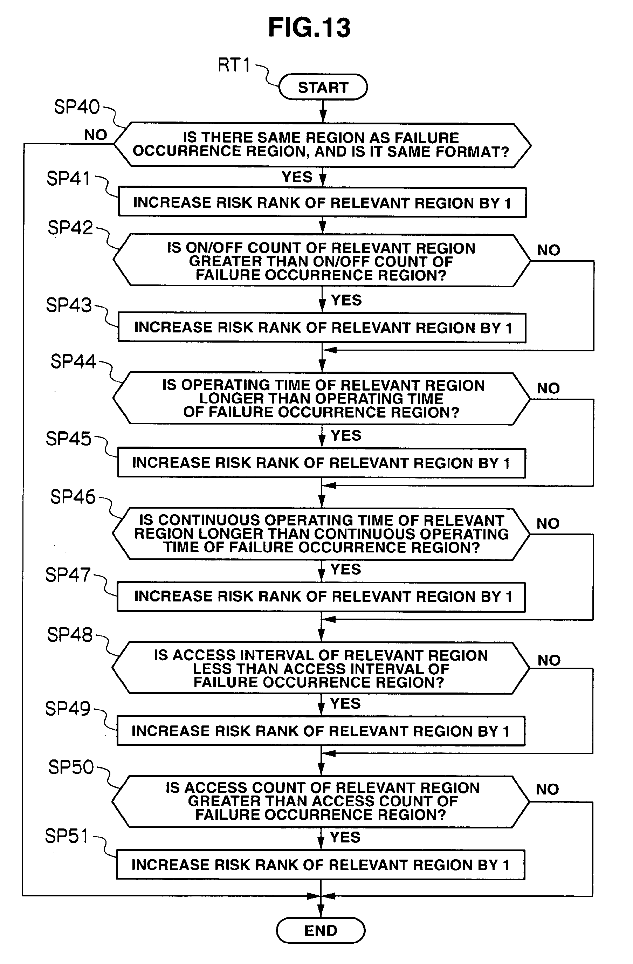

FIG. 13 is a flowchart showing the processing content of the risk ranking processing performed in the upper storage apparatus 4 and each lower storage apparatus 6 at step SP18, step SP19 and step SP22 of the failure information consolidation processing explained with reference to FIG. 11 and FIG. 12. The upper CPU 19 and lower CPU 19A execute such risk ranking processing based on the risk ranking determination programs 31, 70 (FIG. 3, FIG. 7) and according to the risk ranking processing routine RT1 shown in FIG. 13.

In other words, the upper CPU 19 or lower CPU 19A foremost determines whether the own storage apparatus has the same region as the failure occurrence region of the failed lower storage apparatus 6 and whether such region is of the same format as the failure occurrence region based on the system failure information 91 (FIG. 9) updated at step SP16 of the failure information consolidation processing explained with reference to FIG. 11 and FIG. 12 or sent from the upper storage apparatus at step SP17, and the system configuration information stored in the shared memory 15, 15A of the own storage apparatus (SP40).

In this example, since the failure occurrence region is a logical volume VOL (specifically the disk device 10), the upper CPU 19 or lower CPU 19A will determine whether the disk device 10 (same region) exists in the own storage apparatus, and, when such disk device 10 exists, and whether it is the same type (same format) as the same manufacturer of the disk device 10 subject to a failure.

The upper CPU 19 or lower CPU 19A will end this risk ranking processing when a negative result is obtained in this determination.

Meanwhile, when the upper CPU 19 or lower CPU 19A obtained a positive result in this determination, it increments the risk ranking by "1" in the same region (this is hereinafter referred to as a "region subject to risk determination") of the same format as the failure occurrence region in the own storage apparatus (SP41), and thereafter determines whether the on/off count of the region subject to risk determination is greater than the on/off count of the failure occurrence region based on the system operation information 94A, 94C among the failure information 22, 27 (FIG: 9, FIG. 10) (SP42).

And when the upper CPU 19 or lower CPU 19A obtains a positive result in this determination, the routine proceeds to step SP44, and, contrarily, when a negative result is obtained, it increments the risk ranking of this region subject to risk determination by "1" (SP43), and thereafter determines whether the operating time of the region subject to risk determination is longer than the operating time of the failure occurrence region based on the system operation information 94A, 94C (FIG. 9, FIG. 10) among the failure information 22, 27 (FIG. 9, FIG. 10) (SP44).

When the upper CPU 19 or lower CPU 19A obtains a positive result in this determination, the routine proceeds to step SP46, and, contrarily, when a negative result is obtained, it increments the risk ranking of this region subject to risk determination by "1" (SP45), and determines whether the continuous operating time of the region subject to risk determination is longer than the continuous operating time of the failure occurrence region based on the system operation information 94A, 94C (FIG. 9, FIG. 10) among the failure information 22, 27 (FIG. 9, FIG. 10) (SP46).

When the upper CPU 19 or lower CPU 19A obtains a positive result in this determination, the routine proceeds to step SP48, and, contrarily, when a negative result is obtained, it increments the risk ranking of this region subject to risk determination by "1" (SP47), and thereafter determines whether the access interval from the host system 2 to the region subject to risk determination is less than the access interval from the host system 2 to the failure occurrence region based on the system operation information 94A, 94C (FIG. 9, FIG. 10) among the failure information 22, 27 (FIG. 9, FIG. 10) (SP48).

When the upper CPU 19 or lower CPU 19A obtains a positive result in this determination, the routine proceeds to step SP50, and, contrarily, when a negative result is obtained, it increments the risk ranking of this region subject to risk determination by "1" (SP49), and thereafter determines whether the access frequency from the host system 2 to the region subject to risk determination is greater than the access frequency from the host system 2 to the failure occurrence region based on the system operation information 94A, 94C (FIG. 9, FIG. 10) among the failure information 22, 27 (FIG. 9, FIG. 10) (SP50).

When the upper CPU 19 or lower CPU 19A obtains a positive result in this determination, it ends this risk ranking processing sequence, and, contrarily, when a negative result is obtained, it increments the risk ranking of this region subject to risk determination by "1" (SP51), and thereafter end this risk ranking processing sequence.

Like this, the upper CPU 19 or lower CPU 19A executes the risk ranking to the same region in the same format as the failure occurrence region of the failed lower storage apparatus 6 existing in the own storage apparatus.

Incidentally, in the case of this embodiment, in order to differentiate from a case where the failure occurring in the failure occurrence region in the failed lower storage apparatus 6 is based on an initial malfunction in the determination at step SP42, the upper CPU 19 or lower CPU 19A will omit the determination at step SP42 and the count-up processing of risk ranking of the region subject to risk determination at step SP43 based on such determination if the on/off count of the failure occurrence region is less than the predetermined initial malfunction judgment count. Here, the initial malfunction judgment count is a statistically sought numerical figure in which the failure of such count or less is considered to be an initial malfunction.

Similarly, when the operating time, continuous operating time, access interval or access frequency of the failure occurrence region in the determination at step SP44, step SP46, step SP48 or step SP50 is less than a predetermined threshold value of the operating time, continuous operating time, access interval or access frequency, the upper CPU 19 or lower CPU 19 omits the determination at step SP44, step SP46, step SP48 or step SP50, and the count-up processing of risk ranking of the region subject to risk determination at step SP44, step SP46, step SP48 or step SP50 based on such determination.

Like this, with this storage system 1, by determining the risk ranking of the region subject to risk determination in consideration of the occurrence of a failure being an initial malfunction, risk ranking of the region subject to risk determination can be determined more accurately.

### (2-4) Substitute Volume Selection Processing

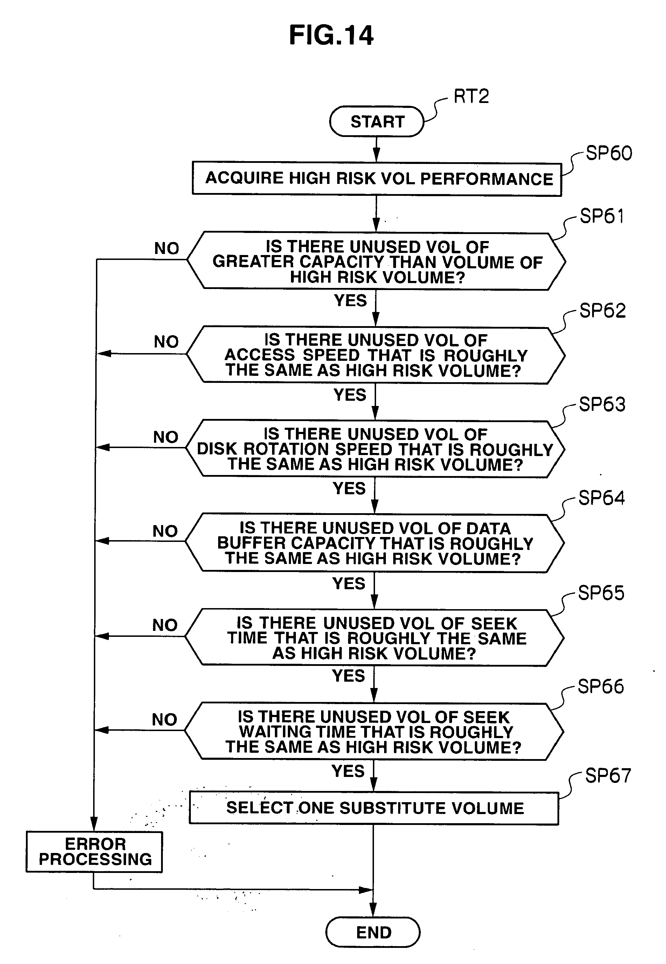

Meanwhile, FIG. 14 is a flowchart showing the processing content of the substitute volume selection processing for selecting the substitute volume VOL to become the substitute of the dangerous volume VOL to be performed in the upper storage apparatus 6 at step SP27 of the failure information consolidation processing explained with reference to FIG. 11 and FIG. 12. The upper CPU 19 selects the substitute volume VOL having the same performance as the dangerous volume VOL based on the unused volume management program 35 (FIG. 3) and according to the substitute volume selection processing routine shown in FIG. 14.

In other words, the upper CPU 19 foremost accesses the lower storage apparatus 6 having the dangerous volume VOL, and acquires the performance information of the dangerous volume VOL based on the system configuration information stored in the shared memory 15 (FIG. 2) (SP60). Specifically, the upper CPU 19 acquires, from the system configuration information stored in the shared memory 15A (FIG. 2) of the lower storage apparatus 6, capacity of the dangerous volume VOL, and the access speed, disk rotating speed, data buffer capacity, average seek time and average seek waiting time of the disk device 10 providing such dangerous volume VOL as such performance information.

The upper CPU 19 thereafter sequentially determines, based on the performance information of the dangerous volume VOL acquired as described above and the system unused volume management table 38 (FIG. 6), whether there is an unused volume VOL with a capacity that is larger than the capacity of the dangerous volume VOL in the storage system 1 (SP61), whether there is an unused volume VOL provided by the disk device 10 having an access speed that is roughly the same as the access speed of the disk device 10 providing the dangerous volume VOL (SP62), and whether there is an unused volume VOL provided by the disk device 10 having a disk rotating speed that is roughly the same as the disk rotating speed of the disk device 10 providing the dangerous volume VOL (SP63).

Further, the upper CPU 19 thereafter sequentially determines whether there is an unused volume VOL provided by the disk device 10 having a buffer capacity that is roughly the same as the buffer capacity of the disk device 10 providing the dangerous volume VOL (SP64), whether there is an unused volume VOL provided by the disk device 10 having an average seek time that is roughly the same as the average seek time of the disk device 10 providing the dangerous volume VOL (SP65), and whether there is an unused volume VOL provided by the disk device 10 having an average seek waiting time that is roughly the same as the average seek waiting time of the disk device 10 providing the dangerous volume VOL (SP66).

When the upper CPU 19 obtains a negative result in any one of the determinations at step SP61 to step SP66, it executes predetermined error processing of displaying a warning indicating that it was not possible to select a substitute volume VOL to become the substitute of the dangerous volume VOL on the display of the management terminal 18 (FIG. 2) (SP67), and thereafter ends this substitute volume selection processing.

Meanwhile, when the upper CPU 19 obtains a positive result in all determinations at step SP61 to step SP66, it selects as the substitute volume VOL one unused volume VOL having a performance that is the closest to the performance of the dangerous volume VOL among the unused volume VOL satisfying the conditions of step SP61 to step SP66 (SP67), and thereafter ends this substitute volume selection processing.

Like this, with this storage system 1, by selecting an unused volume VOL having a performance that is closest to the performance of the dangerous volume VOL as the substitute volume VOL of the dangerous volume VOL, it is possible to prevent changes in the data reading or writing speed from happening when data of the dangerous volume VOL is migrated to the substitute volume VOL, or when data is returned from the substitute volume VOL to the original dangerous volume VOL after the exchange of components. As a result, the user using the substitute volume VOL or original dangerous volume VOL after the components are exchanged will not recognize that such data was migrated.

Incidentally, in the present embodiment, as the scope of "roughly the same" in step SP61 to step SP67, for instance, a scope of roughly ±5% to ±10% of the corresponding performance of the disk device 10 providing the dangerous volume VOL. Nevertheless, other scopes may be applied as the scope of "roughly the same".

### (3) Effect of Present Embodiment

With the storage system 1 according to the present embodiment, when a failure occurrence notice is issued from any one of the lower storage apparatuses 6, the upper storage apparatus 4 performing the relay thereof detects the occurrence of a failure in the lower storage apparatus 6 based on such failure occurrence notice, and then collects failure information 27 containing the detailed information of failure from the each lower storage apparatus 6. Thus, for instance, even when a failure occurs in a plurality of storage apparatuses, it is possible to collectively acquire the failure description of these storage apparatuses from the virtualization apparatus. As a result, according to this storage system 1, it is possible to simplify the operation of collecting failure information during maintenance work, and the operating efficiency of the maintenance work can be improved thereby.

Further, with this storage system 1, when a failure occurs in any one of the lower storage apparatuses 6, it is possible to collect failure information from the other unfilled lower storage apparatuses 6 other than such failed lower storage apparatus 6, predict the occurrence of a failure based on the collected failure information, and migrate data stored in the dangerous volume VOL predicted to be subject to a failure in the near future based on the prediction result to another substitute volume VOL. Thus, it is possible to improve the reliability of the overall storage system 1.

### (4) Other Embodiments

Incidentally, in the foregoing embodiments, although a case was explained where the lower storage apparatus 6 sends to the upper storage apparatus 4 only the detailed information permitted in advance by the vendor among the information 27, the present invention is not limited thereto, and, for instance, it is possible to encrypt at least detailed information not permitted to be sent to the upper storage apparatus 4 based on a presetting so that the lower storage apparatus 6 can encrypt a part or the whole of the failure information 27 and send it to the upper storage apparatus 4.

Further, in the foregoing embodiments, as the detailed information of the failure information 22, 27, although explained was a case where 5 types of information; namely, exchange region information 92A to 92C, failure occurrence system internal status information 93A to 93C, system operation information 94A to 94C, other information 95A to 95C and risk rank information 96A to 96C are used, the present invention is not limited thereto, and other information may be added or substituted as a part or the whole of the failure information 22, 27.

## Claims

1. A virtualization system having one or more storage apparatuses, and a virtualization apparatus for virtualizing a storage extent provided respectively by each of said storage apparatuses and providing said storage extent to a host system,
wherein each of said storage apparatuses sends failure information containing detailed information of said failure to said virtualization apparatus when a failure occurs in an own storage apparatus; and
wherein said virtualization apparatus stores said failure information sent from said storage apparatus.

2. The virtualization system according to claim 1,
wherein, said storage apparatus gives a predetermined failure occurrence notice to said host system via said virtualization apparatus when a failure occurs, and thereafter sends said failure information to said virtualization apparatus; and
wherein said virtualization apparatus requests said storage apparatus to send said failure information when said failure information is not sent from said storage apparatus after relaying said failure occurrence notice.

3. The virtualization system according to claim 1 or claim 2,
wherein said storage apparatus only sends to said virtualization apparatus information permitted based on a presetting among said failure information.

4. The virtualization system according to claim 1 or claim 2,
wherein said storage apparatus encrypts at least information not permitted based on a presetting among said failure information and sends said information to said virtualization apparatus.

5. The virtualization system according to any one of claims 1 to 4,
wherein, when said virtualization apparatus receives said failure information sent from any one of said storage apparatuses, said virtualization apparatus collects said failure information of said storage apparatus from each of the other storage apparatuses.

6. The virtualization system according to any one of claims 1 to 5,
wherein said virtualization apparatus predicts the occurrence of a failure based on said failure information sent from each of said storage apparatuses.

7. The virtualization system according to claim 6,
wherein said virtualization apparatus migrates data stored in a dangerous volume configured from a logical volume which may be subject to failure to a substitute volume configured from another substitute logical volume.

8. The virtualization system according to claim 7,
wherein said virtualization apparatus selects as said substitute volume a logical volume having the same performance as said dangerous volume, and migrates data of said dangerous volume to said logical volume.

9. A failure correction method in a virtualization system having one or more storage apparatuses, and a virtualization apparatus for virtualizing a storage extent provided respectively by each of said storage apparatuses and providing said storage extent to a host system, comprising:
a first step of each of said storage apparatuses sending failure information containing detailed information of said failure to said virtualization apparatus when a failure occurs in an own storage apparatus; and
a second step of said virtualization apparatus storing said failure information sent from said storage apparatus.

10. The failure correction method according to claim 9,
wherein at said first step,
said storage apparatus gives a predetermined failure occurrence notice to said host system via said virtualization apparatus when a failure occurs, and thereafter sends said failure information to said virtualization apparatus; and
wherein said virtualization apparatus requests said storage apparatus to send said failure information when said failure information is not sent from said storage apparatus after relaying said failure occurrence notice.

11. The failure correction method according to claim 9 or claim 10,
wherein at said first step,
said storage apparatus only sends to said virtualization apparatus information permitted based on a presetting among said failure information.

12. The failure correction method according to claim 9 or claim 10,
wherein at said first step,
said storage apparatus encrypts at least information not permitted based on a presetting among said failure information and sends said information to said virtualization apparatus.

13. The failure correction method according to any one of claims 9 to 12,
wherein at said second step,
when said virtualization apparatus receives said failure information sent from any one of said storage apparatuses, said virtualization apparatus collects said failure information of said storage apparatus from each of the other storage apparatuses.

14. The failure correction method according to any one of claims 9 to 13, further comprising a third step of said virtualization apparatus predicting the occurrence of a failure based on said failure information sent from each of said storage apparatuses.

15. The failure correction method according to claim 14, further comprising a fourth step of said virtualization apparatus migrating data stored in a dangerous volume configured from a logical volume which may be subject to failure to a substitute volume configured from another substitute logical volume.

16. The failure correction method according to claim 15,
wherein at said fourth step,
said virtualization apparatus selects as said substitute volume a logical volume having the same performance as said dangerous volume, and migrates data of said dangerous volume to said logical volume.
